# EUROPEAN PATENT SPECIFICATION

(11) **EP 4 197 883 B1**
(45) Date of publication and mention of the grant of the patent: **14.05.2025**
(21) Application number: 22214265.5
(22) Date of filing: 16.12.2022
(51) Int. Cl.: B62B 9/18, B62B 7/14, A47D 13/02

(54) **CRADLE**
WIEGE
BERCEAU

(30) Priority: 20.12.2021 IT 202100031745
(43) Date of publication of application: 21.06.2023
(73) Proprietor: L'Inglesina Baby S.p.A., 36077 Altavilla Vicentina (VI) (IT)
(72) Inventor: MARCHIORI, Nicola, 36043 CAMISANO VICENTINO VI (IT); DALLA MOTTA, Manuel, 35044 MONTAGNANA PD (IT)
(74) Representative: Modiano, Micaela Nadia

(56) References cited:
- CN-A- 110 949 488
- CN-A- 112 124 405
- GB-A- 212 988
- GB-A- 247 291

## Description

The present invention relates to a cradle, particularly of the type that can be associated with a supporting frame, for example movable, like a chassis for a buggy, or fixed.

In the known art, prams for babies and for children are generally constituted by a chassis on wheels, on which a carriage body is supported for accommodating the infant.

The carriage body is fitted internally with a bottom which constitutes the surface on which to rest the child in the recumbent position.

The bottom is usually associated with a mat in order to increase the comfort of use.

The bottom surface is sometimes divided into two portions, one of which is fixed for resting the pelvis and legs, and one can be raised, the function of which is to act as a backrest for supporting the trunk and head in a more or less reclined position.

In any case, in conventional solutions the bottom surface is kinematically connected to or supported by the external containment body, which in turn is connected to the frame.

This aspect, which as mentioned is common to all conventional cradles, has the advantage of making the constructive structure simple.

However, since the bottom surface is an integral part of the external containment body, it has been found that during use vibrations are transferred from the ground to the bottom surface and therefore to the infant or child.

In the best of cases, this aspect results in the infant or child slipping downward or, if the frame is moving over terrain that is unstable or with an irregular surface, an extremely bothersome transfer of vibrations.

Other cradles known from the prior art are disclosed in CN 110949488 A, in GB 212988 A and in CN 112124405 A.

The aim of the present invention is to provide a cradle that is capable of improving the known art in one or more of the above mentioned aspects.

Within this aim, an object of the invention is to make available a cradle that makes it possible to increase the comfort of use for the infant or child.

Another object of the invention is to provide a cradle that is highly reliable, easy to implement and of low cost.

This aim and these and other objects which will become better apparent hereinafter are achieved by a cradle according to claim 1, optionally provided with one or more of the characteristics of the dependent claims.

Further characteristics and advantages of the invention will become better apparent from the description of a preferred, but not exclusive, embodiment of the cradle according to the invention, which is illustrated by way of non-limiting example in the accompanying drawings wherein:

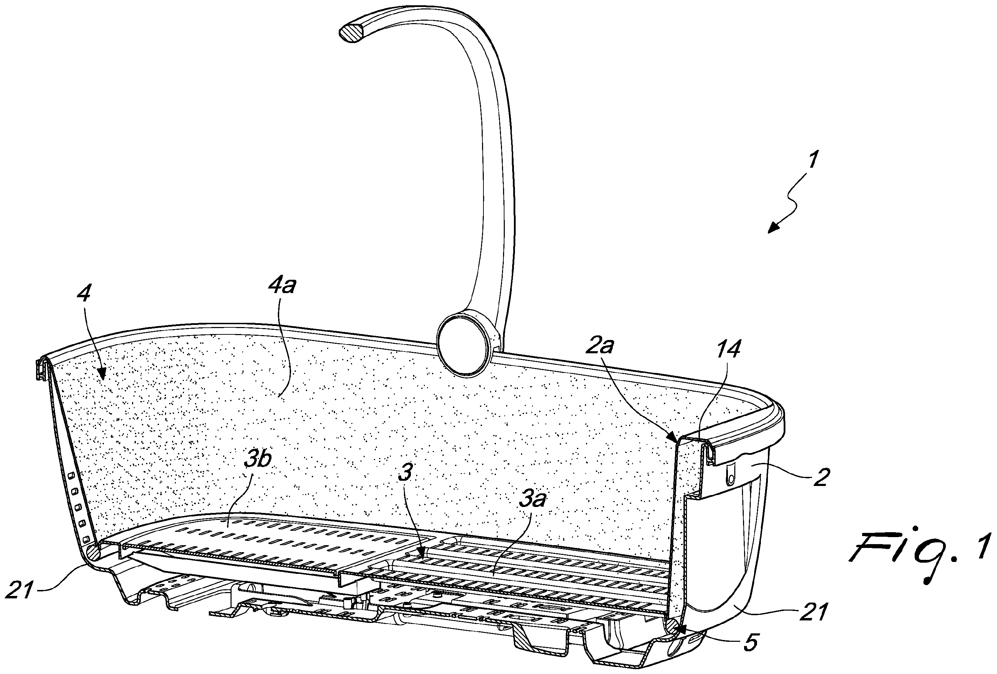

Figure 1 is a perspective cross-sectional view, taken along a vertical plane, of the cradle according to the invention;

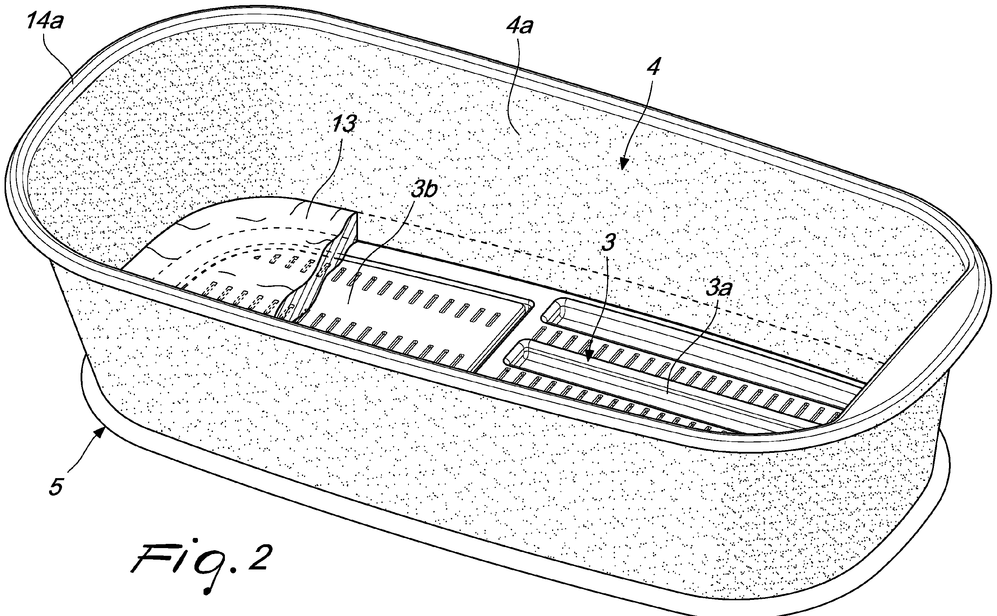

Figure 2 is a perspective view of the supporting body and of the bottom element;

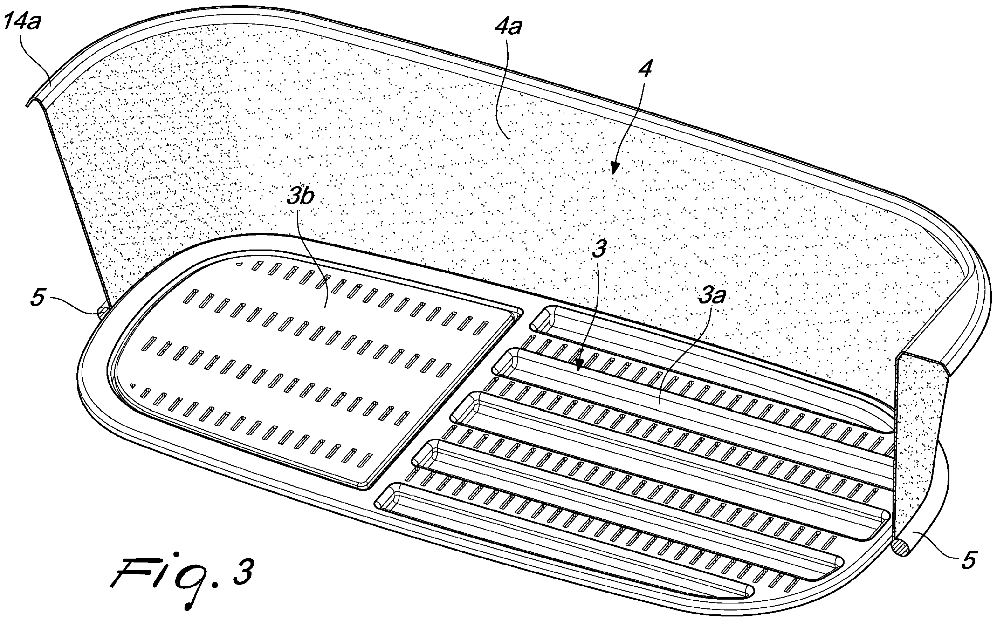

Figure 3 is a perspective cross-sectional view, taken along a vertical plane, of the supporting body and the bottom element of Figure 2.

With reference to the figures, the cradle according to the invention, generally designated by the reference numeral 1, comprises a body shell 2 which defines an upper access opening 2a and a bottom element 3.

The bottom element 3 is provided with at least one base portion 3a which lies, during use, on a substantially horizontal plane.

The bottom element 3 is designed to define a resting surface for a child to be accommodated.

Typically, the bottom element 3 is associated with a mat 13.

According to the present invention, the bottom element 3 is associated with at least one supporting body 4 which is connected to a coupling portion 14 to couple to the body shell 2.

In particular, the at least one supporting body 4 is adapted to allow a relative movement of the bottom element 3 with respect to the body shell 2.

According to the invention, interface means 5 are provided, which act between the bottom element 3 and an abutment portion 21 defined by the body shell 2.

In particular, the interface means 5 are adapted to contrast the movement of the bottom element 3 with respect to the body shell 2.

According to a preferred embodiment, the relative movement of the bottom element 3 with respect to the body shell 2 has at least one horizontal component.

The relative movement of the bottom element 3 with respect to the body shell 2 has at least one vertical component.

The relative movement can obviously be of the "compound" type and have a horizontal component and a vertical component.

According to a preferred embodiment, the coupling portion 14 is arranged at a higher elevation than the bottom element 3.

In practice, in this case, the bottom element is "hung" from the coupling portion 14, and therefore from the body shell 2 and, evidently, is decoupled from the vibrations to which the body shell 2 is subjected.

The coupling portion 14 comprises a peripheral lip that can be hooked over the upper edge of the body shell 2 at the upper access opening 2a.

With reference to the embodiment shown in the figures, the supporting body 4 comprises at least one plate-like body 4a which is connected, at the upper edge, to the coupling portion 14 and, at the lower edge, to a perimetric portion of the bottom element 3.

Preferably, the plate-like body 4a comprises a fabric element.

Advantageously, the fabric element is of the elasticized type.

It has been found that such implementation choice makes it possible to "isolate" the bottom element 3 from the body shell 2, thus preventing any vibrations or stress to which the body shell 2 is subjected during the movement of the frame from being transferred to the bottom element 3 and therefore to the infant or to the child.

The interface means 5 comprise at least one elastically deformable element which acts between the bottom element 3 and the abutment portion 21.

Such elastically deformable element can be constituted by an elongated body made of rubber or of compressible material, which is configured to be in contact both with a portion of the bottom element 3 and with the abutment portion 21, so as to reduce the movements along a horizontal direction, and/or optionally along a vertical direction, if the body shell 2 is in motion.

As is known, it is possible for the bottom element 3 to have a base portion 3a associated with a back portion 3b: the back portion 3b can be inclined with respect to the base portion 3a.

The body shell 2 is associated, optionally removably, with a movable frame, for example a chassis for prams and/or for strollers, provided with wheels.

There is no reason why the body shell 2 cannot be associated with a fixed frame for use as a cot, for example in the home.

The use of the cradle 1, according to the invention, is evident from the foregoing description.

The body shell 2, supporting the bottom element 3, is associated with the movable frame.

During movement of the movable frame, any imperfections in the ground discharge a series of vibrations directly on the body shell 2.

However, such vibrations are not transferred directly to the bottom element 3, by virtue of the interposition, between the body shell 2 and the bottom element 3, of the supporting body 4 and by virtue of the presence of the interface means 5, which effectively dampen the vibrations.

In practice it has been found that the invention fully achieves the intended aim and objects by providing a cradle capable of ensuring a high level of comfort of use.

The invention as defined in claim 1 is susceptible of numerous modifications and variations, all of which are within the scope of the appended claims.

In practice the materials employed, provided they are compatible with the specific use, and the contingent dimensions and shapes, may be any according to requirements and to the state of the art.

## Claims

1. A cradle (1) comprising a body shell (2) which defines an upper access opening (2a) and a bottom element (3) which is provided with at least one base portion (3a) which lies, during use, on a substantially horizontal plane and defines at least one perimetric edge part, said bottom element (3) being designed to define a resting surface for a child to be accommodated, said bottom element (3) being associated with at least one supporting body (4) which is connected to a coupling portion (14) for coupling to said body shell (2), said at least one supporting body (4) being adapted to allow a relative movement of said bottom element (3) with respect to said body shell (2), interface means (5) being provided which act between said bottom element (3) and an abutment portion (21) defined by said body shell (2) and are adapted to contrast the movement of said bottom element (3) with respect to said body shell (2), **characterized in that** said coupling portion (14) comprising a peripheral lip that can be hooked over the upper edge of the body shell (2) at the upper access opening (2a).

2. The cradle (1) according to claim 1, **characterized in that** said at least one supporting body (4) is adapted to allow a relative movement of said bottom element (3) with respect to said body shell (2) which has a component on a substantially horizontal plane.

3. The cradle (1) according to claim 1 or 2, **characterized in that** said at least one supporting body (4) is adapted to allow a relative movement of said bottom element (3) with respect to said body shell (2) which has a component on a substantially vertical plane.

4. The cradle (1) according to claim 1, **characterized in that** said coupling portion (14) is arranged at a higher elevation than said bottom element (3).

5. The cradle (1) according to one or more of the preceding claims, **characterized in that** said supporting body (4) comprises at least one plate-like body (4a) which is connected, at the upper edge, to said coupling portion (14) and, at the lower edge, to a perimetric portion of said bottom element (3).

6. The cradle (1) according to claim 5, **characterized in that** said plate-like body (4a) comprises a fabric element.

7. The cradle (1) according to claim 6, **characterized in that** said fabric element is of the elasticized type.

8. The cradle (1) according to claim 1, **characterized in that** said interface means (5) comprise at least one elastically deformable element which acts between said bottom element (3) and said abutment portion (21).

9. The cradle (1) according to one or more of the preceding claims, **characterized in that** said bottom element (3) comprises a base portion (3a) which is associated with a back portion (3b) which can be inclined with respect to said base portion (3a).

10. The cradle (1) according to one or more of the preceding claims, **characterized in that** said body shell (2) is associated with a movable frame.

## Patentansprüche

1. Eine Wiege (1), die ein Gehäuse (2) umfasst, das eine obere Zugangsöffnung (2a) und ein Bodenelement (3) bestimmt, welches mit mindestens einem Basisabschnitt (3a) versehen ist, der im Gebrauch auf einer im Wesentlichen horizontalen Ebene liegt und mindestens einen Umfangsrandteil bestimmt; wobei das Bodenelement (3) konstruiert ist, um eine Auflagefläche für ein aufzunehmendes Kind zu bestimmen, wobei das Bodenelement (3) mit mindestens einem tragenden Körper (4) verbunden ist, welcher mit einem Kopplungsabschnitt (14) zum Koppeln mit dem Gehäuse (2) verbunden ist, wobei der mindestens eine tragende Körper (4) ausgebildet ist, um eine Relativbewegung des Bodenelements (3) im Verhältnis zu dem Gehäuse (2) zu ermöglichen; wobei Schnittstellenmittel (5) bereitgestellt sind, die zwischen dem Bodenelement (3) und einem von dem Gehäuse (2) bestimmten Widerlagerabschnitt (21) arbeiten und ausgebildet sind, um der Bewegung des Bodenelements (3) im Verhältnis zu dem Gehäuse (2) entgegenzuwirken; **dadurch gekennzeichnet, dass** der Kopplungsabschnitt (14) eine periphere Lippe umfasst, die an der oberen Zugangsöffnung (2a) über die obere Kante des Gehäuses (2) gehängt werden kann.

2. Die Wiege (1) gemäß Anspruch 1, **dadurch gekennzeichnet, dass** der mindestens eine tragende Körper (4) ausgebildet ist, um eine Relativbewegung des Bodenelements (3) im Verhältnis zu dem Gehäuse (2) zu gestatten, das eine Komponente auf einer im Wesentlichen horizontalen Ebene hat.

3. Die Wiege (1) gemäß Anspruch 1 oder 2, **dadurch gekennzeichnet, dass** der mindestens eine tragende Körper (4) ausgebildet ist, um eine Relativbewegung des Bodenelements (3) im Verhältnis zu dem Gehäuse (2) zu gestatten, das eine Komponente auf einer im Wesentlichen vertikalen Ebene hat.

4. Die Wiege (1) gemäß Anspruch 1, **dadurch gekennzeichnet, dass** der Kopplungsabschnitt (14) auf einem höheren Niveau angeordnet ist als das Bodenelement (3).

5. Die Wiege (1) gemäß einem oder mehreren der obigen Ansprüche, **dadurch gekennzeichnet, dass** der tragende Körper (4) mindestens einen plattenähnlichen Körper (4a) umfasst, der an der oberen Kante mit dem Kopplungsabschnitt (14) und an der unteren Kante mit einem Umfangsabschnitt des Bodenelements (3) verbunden ist.

6. Die Wiege (1) gemäß Anspruch 5, **dadurch gekennzeichnet, dass** der plattenähnliche Körper (4a) ein Textilelement umfasst.

7. Die Wiege (1) gemäß Anspruch 6, **dadurch gekennzeichnet, dass** das Textilelement vom elastischen Typ ist.

8. Die Wiege (1) gemäß Anspruch 1, **dadurch gekennzeichnet, dass** die Schnittstellenmittel (5) mindestens ein elastisch verformbares Element umfassen, das zwischen dem Bodenelement (3) und dem Widerlagerabschnitt (21) arbeitet.

9. Die Wiege (1) gemäß einem oder mehreren der obigen Ansprüche, **dadurch gekennzeichnet, dass** das Bodenelement (3) einen Basisabschnitt (3a) umfasst, der mit einem Rückenlehnenabschnitt (3b) verbunden ist, welcher mit Bezug auf den Basisabschnitt (3a) geneigt werden kann.

10. Die Wiege (1) gemäß einem oder mehreren der obigen Ansprüche, **dadurch gekennzeichnet, dass** das Gehäuse (2) mit einem beweglichen Rahmen verbunden ist.

## Revendications

1. Berceau (1) comprenant une coque (2) définissant une ouverture d'accès supérieure (2a) et un élément de fond (3) pourvu d'au moins une partie de base (3a) reposant, lors de l'utilisation, sur un plan sensiblement horizontal et définissant au moins une partie de bord périmétrique, ledit élément de fond (3) étant conçu pour définir une surface de repos pour un enfant à accueillir, ledit élément de fond (3) étant associé à au moins un corps de support (4) qui est relié à une partie d'accouplement (14) pour l'accouplement à ladite coque (2), ledit au moins un corps de support (4) étant adapté pour permettre un mouvement relatif dudit élément de fond (3) par rapport à ladite coque (2), des moyens d'interface (5) étant prévus qui agissent entre ledit élément de fond (3) et une portion de butée (21) définie par ladite coque (2) et sont adaptés pour contraster le mouvement dudit élément de fond (3) par rapport à ladite coque (2), **caractérisé par le fait que** ladite partie d'accouplement (14) comprend une lèvre périphérique qui peut être accrochée au bord supérieur de la coque (2) au niveau de l'ouverture d'accès supérieure (2a).

2. Le berceau (1) selon la revendication 1, **caractérisé en ce que** ledit au moins un corps de support (4) est adapté pour permettre un mouvement relatif dudit élément de fond (3) par rapport à ladite coque (2) qui présente une composante sur un plan sensiblement horizontal.

3. Le berceau (1) selon la revendication 1 ou 2, **caractérisé en ce que** ledit au moins un corps de support (4) est adapté pour permettre un mouvement relatif dudit élément de fond (3) par rapport à ladite coque (2) qui a une composante sur un plan sensiblement vertical.

4. Le berceau (1) selon la revendication 1, **caractérisé en ce que** ladite partie d'accouplement (14) est disposée à une hauteur supérieure à celle de l'élément de fond (3).

5. Le berceau (1) selon une ou plusieurs des revendications précédentes, **caractérisé en ce que** ledit corps de support (4) comprend au moins un corps en forme de plaque (4a) qui est relié, au bord supérieur, à ladite partie d'accouplement (14) et, au bord inférieur, à une partie périmétrique dudit élément de fond (3).

6. Le berceau (1) selon la revendication 5, **caractérisé en ce que** ledit corps en forme de plaque (4a) comprend un élément en tissu.

7. Le berceau (1) selon la revendication 6, **caractérisé en ce que** ledit élément en tissu est du type élastique.

8. Le berceau (1) selon la revendication 1, **caractérisé en ce que** lesdits moyens d'interface (5) comprennent au moins un élément élastiquement déformable qui agit entre ledit élément de fond (3) et ladite portion de butée (21).

9. Le berceau (1) selon une ou plusieurs des revendications précédentes, **caractérisé en ce que** ledit élément de fond (3) comprend une partie de base (3a) qui est associée à une partie arrière (3b) qui peut être inclinée par rapport à ladite partie de base (3a).

10. Le berceau (1) selon une ou plusieurs des revendications précédentes, **caractérisé en ce que** ladite coque (2) est associée à un cadre mobile.
